# EUROPEAN PATENT APPLICATION

(11) **EP 4 811 156 A1**
(43) Date of publication of application: **23.09.2026**
(21) Application number: 25226463.5
(22) Date of filing: 22.12.2025
(51) Int. Cl.: G06F 16/242, G06F 16/2452

(54) **CONTEXTUAL SEARCH ON A DATABASE BASED ON DYNAMIC REWARD FUNCTION USING RELEVANCY COUNT**

(30) Priority: 20.03.2025 IN 202521025311
(71) Applicant: Tata Consultancy Services Limited, Maharashtra (IN)
(72) Inventor: BHAT, Jyoti, 560100 Bangalore, Karnataka (IN); KALELE, Amit, 411057 Pune, Maharashtra (IN); ATALE, Rohan Dhanraj, 411057 Pune, Maharashtra (IN); DIMRI, Sudhanshu, 411057 Pune, Maharashtra (IN)
(74) Representative: Goddar, Heinz J.

(57) **Abstract**

A method and system for contextual search on a database based on dynamic reward function using relevancy count is disclosed. Generative artificial intelligence has challenges in handling complex natural language queries for database transactions that require contextual rather than direct column mappings. The method disclosed extracts contextually relevant data from relational databases using a combination of Retrieval-Augmented Generation (RAG) and a contextual Monte Carlo Tree Search (CMCTS) with a dynamic reward function. The method disclosed uses the dynamic reward function during the simulation step of the CMCTS on a Monte Carlo Tree by calculating a contextually relevant score of a current node in the Monte Carlo Tree. The method also uses a modified upper confidence bound during selection step of the CMCTS. The method disclosed solves the real-world problem of searching for companies relevant to a given topic or capability.

## Description

### CROSS-REFERENCE TO RELATED APPLICATIONS AND PRIORITY

The present application claims priority to Indian application no. 202521025311 filed on March 20, 2025.

### TECHNICAL FIELD

The disclosure herein generally relates to contextual search on a database for a natural language query, and, more particularly, to a method and system for contextual search on a database based on dynamic reward function using relevancy count.

### BACKGROUND

Large Language Models (LLMs) are widely used for database querying given their ability to interpret natural language inputs and construct corresponding database queries based on the provided information. This approach is effective when the input can be directly mapped to specific database columns and appropriate filters can be applied. To highlight the technology gaps in the existing methods, a database of companies is considered which consists of information on name, description, founders, region etc. With respect to this database, queries like:
- Find the startups in New York.
- Show me the startups working in Speech Recognition and in LA region.
can be handled effectively as they can be mapped to appropriate columns and respective filters can be applied. However, given the description column is available, there is no straightforward way to address queries like:
- Find the startups offering omni channel support for customer service.
- List companies offering solutions in customer retention strategies.
Satisfying these queries would require contextually matching the description of companies in the database.

Accurately interpreting context by artificial intelligence (AI) remains a challenge in complex queries that involve multiple tables and intricate relationships where direct column mapping is not feasible or the involved data is such that it requires contextual matching rather than exact matching. The complexity further increases when the column contains descriptive information and this data itself should act like a filter to choose the final content. This is one of the scenarios unsolved by any other natural language processing (NLP) to SQL query conversion methods.

### SUMMARY

Embodiments of the present disclosure present technological improvements as solutions to one or more of the above-mentioned technical problems recognized by the inventors in conventional systems. For example, in one embodiment, a method for contextual search on a database based on dynamic reward function using relevancy count is provided. The method includes selecting a column comprising a plurality of attributes from a relational database based on a natural language query received from a user, using a pre-defined set of heuristics rules applied on a set of columns of the relational database. Further the method includes selecting a set of attributes amongst the plurality of attributes based on a Retrieval-Augmented Generation (RAG), a large language model and the natural language query. Furthermore, the method includes, determining an optimal set of attributes from the set of attributes by performing a Contextual Monte-Carlo tree search (CMCTS). The CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count. Finally, the method includes determining a set of relevant rows corresponding to the optimal set of attributes from the relational database to generate a contextually relevant response to the natural language query.

In another aspect, a system for contextual search on a database based on dynamic reward function using relevancy count is provided. The system comprises memory storing instructions; one or more communication interfaces; and one or more hardware processors coupled to the memory via the one or more communication interfaces, wherein the one or more hardware processors are configured by the instructions to select a column comprising a plurality of attributes from a relational database based on a natural language query received from a user, using a pre-defined set of heuristics rules applied on a set of columns of the relational database. Further the system includes selecting a set of attributes amongst the plurality of attributes based on a Retrieval-Augmented Generation (RAG), a large language model and the natural language query. Furthermore, the system includes, determining an optimal set of attributes from the set of attributes by performing a Contextual Monte-Carlo tree search (CMCTS). The CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count. Finally, the system includes determining a set of relevant rows corresponding to the optimal set of attributes from the relational database to generate a contextually relevant response to the natural language query.

The set of attributes are selected by iteratively updating the RAG using (i) a set of descriptions generated for the plurality of attributes based on a first prompt provided to the large language model, and (ii) the plurality of attributes. Then, a group of attributes amongst the plurality of attributes are selected using the iteratively updated RAG based on the natural language query. And then the set of attributes amongst the group of attributes are selected based on a second prompt provided to the large language model.

A node amongst the set of nodes comprises a set of node attributes. The set of node attributes comprises,
a) a list for storing a set of categorical entities for uniquely defining the node,
b) a win for storing a cumulative reward in the node,
c) a visit for storing number of visit to the node,
d) a parent for storing a parent node of the node,
e) a child for storing children nodes of the node,
f) a total count for storing total number of rows retrieved from the database corresponding to the node,
g) a relevancy count for storing number of relevant rows,
h) a terminal representing (i) true if the node is terminal, or (ii) false if the node is not terminal, and
i) a UCB storing UCB score of the node.

The CMCTS is iteratively performed to construct the Monte Carlo Tree initialized with a root node using the selection step, an expansion step, the simulation step and a back propagation step. The root node is an empty node. The selection step performs traversal on the Monte Carlo Tree along a path from the root node to a leaf node to select a node at each iteration based on the UCB. The expansion step randomly creates a set of new nodes to the Monte Carlo Tree if the selected node in the selection step is a non-terminal node. The simulation step performs a relevancy checking to calculate the reward function using at least (a) the relevancy count and the total count if the total count is less than a pre-defined threshold, or (b) the total count if the total count is greater than the pre-defined threshold, or (c) a pre-defined value if the total count is equal to zero. The back propagation step updates the win and the visit of each node along the path from the leaf node to the root node of the Monte Carlo Tree.

The optimal set of attributes are determined based on the win and the relevancy count at each node along all paths from the root node to each leaf node of the Monte Carlo Tree. The UCB of a node is calculated based on the win, the visit, the visit of a parent node and the total count, wherein the UCB is mathematically represented as, $UCB \left(X\right) = \frac{X . win}{X . visit} + 2 \sqrt{\frac{ln X . parent . visit}{X . visit}} . ln \left(X.total count+1\right)$ where *X* represents the node.

In yet another aspect, there is provided a computer program product comprising a non-transitory computer readable medium having a computer readable program embodied therein, wherein the computer readable program, when executed on a computing device causes the computing device for contextual search on a database based on dynamic reward function using relevancy count is provided. The computer readable program includes selecting a column comprising a plurality of attributes from a relational database based on a natural language query received from a user, using a pre-defined set of heuristics rules applied on a set of columns of the relational database. Further the computer readable program includes selecting a set of attributes amongst the plurality of attributes based on a Retrieval-Augmented Generation (RAG), a large language model and the natural language query. Furthermore, the computer readable program includes, determining an optimal set of attributes from the set of attributes by performing a Contextual Monte-Carlo tree search (CMCTS). The CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count. Finally, the computer readable program includes determining a set of relevant rows corresponding to the optimal set of attributes from the relational database to generate a contextually relevant response to the natural language query.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for contextual search on a database based on dynamic reward function using relevancy count according to some embodiments of the present disclosure.
FIG.2 is an exemplary flow diagram illustrating a method for contextual search on the database based on dynamic reward function using relevancy count according to some embodiments of the present disclosure.
FIG.3 illustrates an overall block diagram depicting the method for contextual search on the database based on dynamic reward function using relevancy count according to some embodiments of the present disclosure.
FIG.4A through FIG. 4F are example illustrations of iterations in a Contextual Monte-Carlo tree search according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The advent of Generative Artificial Intelligence (GenAI) has transformed database interactions by enabling natural language queries to generate accurate SQL representations. However, these methods fail in handling complex queries that require contextual rather than direct column mappings. Embodiments of the present disclosure address the challenge of extracting contextually relevant data from relational databases, even when direct mappings between queries and database schema are infeasible. In the present disclosure a unique algorithm combining Retrieval-Augmented Generation (RAG) and a modified Monte Carlo Tree Search (MCTS) named Contextual MCTS (CMCTS) and a reward function to enable effective contextual querying is disclosed. The method leverages a dynamic reward function to balance exploration and exploitation during query expansion, while integrating semantic relevance checks to optimize search dimensions. The method bridges the gap between natural language query and structured data retrieval, ensuring precise, context-aware results. Performance evaluation using a real-world database with a large number of rows illustrates the algorithm's robustness and effectiveness in identifying optimal query mappings.

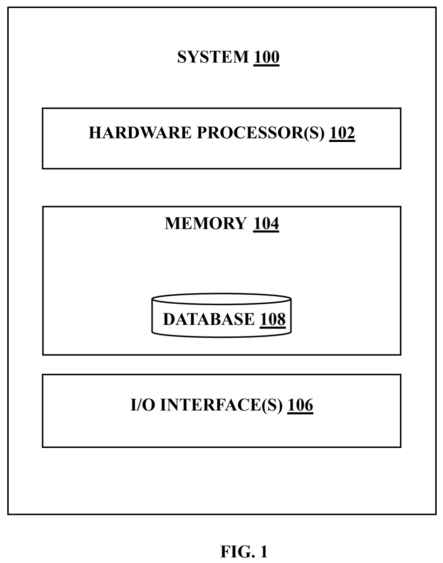

Referring now to the drawings, and more particularly to FIG. 1 through FIG. 4F, where similar reference characters denote corresponding features consistently throughout the figures, there are shown preferred embodiments and these embodiments are described in the context of the following exemplary system and/or method.

FIG. 1 illustrates an exemplary block diagram of a system for contextual search on a database based on dynamic reward function using relevancy count according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

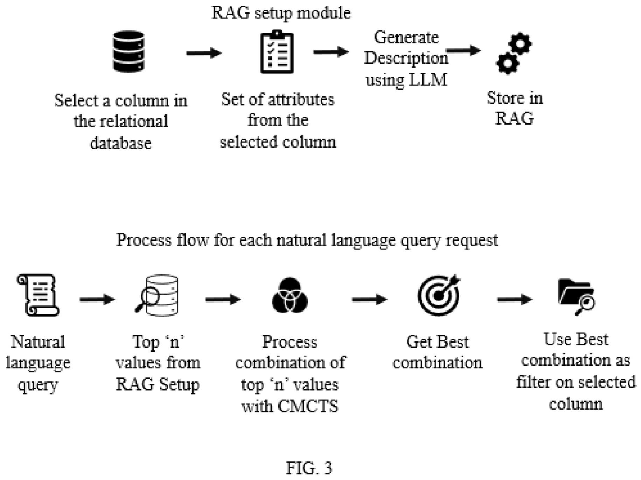

In an embodiment, the memory 104 includes a plurality of modules, such as a RAG setup module (as in FIG.3), a CMCTS module (not shown) and the like. Further, the plurality of modules includes programs or coded instructions that supplement applications or functions performed by the system 100 for executing different steps involved in the process for contextual search in the database by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof.

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external to the system 100 and coupled via the I/O interface 106. The database may include a relational database and so on.

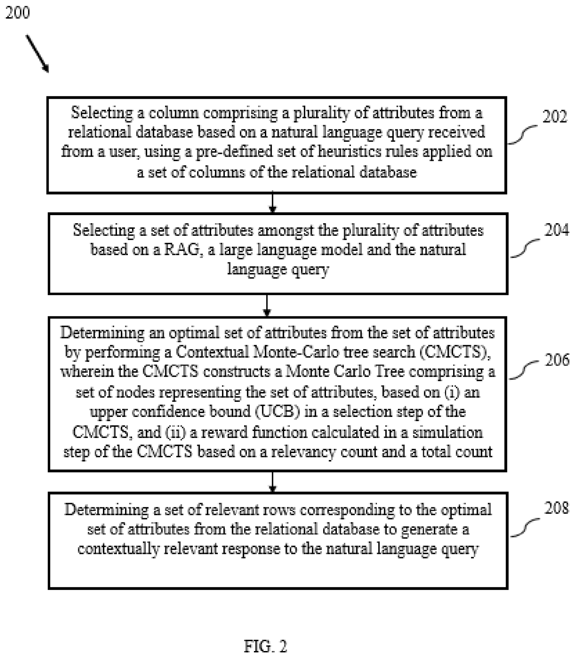

FIG. 2 is an exemplary flow diagram illustrating a method 200 for contextual search on the database based on dynamic reward function using relevancy count according to some embodiments of the present disclosure. The phrases "database" and "relational database", "natural language query" and "query" may alternatively be used in the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1, and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the method blocks described can be combined in any order to implement the method 200, or an alternative method. Furthermore, the method 200 can be implemented in any suitable hardware, software, firmware, or combination thereof. The overall steps explained henceforth are shown as a block diagram in FIG. 3. FIG. 3 is an overall block diagram depicting the method for contextual search on the database based on dynamic reward function using relevancy count according to some embodiments of the present disclosure.

Now referring to FIG. 2, at step 202 of the method 200, one or more hardware processors 102 are configured to select a column comprising a plurality of attributes from a relational database based on a natural language query received from a user, using a pre-defined set of heuristics rules applied on a set of columns of the relational database. For explaining the method disclosed, various notations and definitions are explained as below,
1. Let 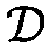 = {*R*₁, *R*₂, *R*₃*,* ...., *Rₙ*} be a relational database with *n* tables. where each *Rᵢ* is a relation corresponding to the i-th table in the database.
2. Let (*A*₁*, A*₂*,A*₃*, ....,Aₘ*) be the set of columns of a relation (i.e., the set of columns of the relational database table
3. Let *Q* = {*qₖ*} as a set of natural language queries *qₖ* related to *D*
4. Given a natural language query *q* ∈ *Q,* a mapping *ζ* is defined such that *q* ⊨ *t* (semantic entailment between q and t), $ζ : Q \to D$ $ζ \left(q\right) ↦ t$ where *t* represents set of rows in 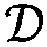 *.*

For explaining the method disclosed henceforth, it is assumed that 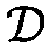 consists of a single table *R* with n columns as ${\left\{{A}_{i}\right\}}_{i = 0}^{n}$. Each column *Aᵢ* is associated with a domain *Dᵢ*, which is a set of all possible values that *Aᵢ* can take. To map an input natural language query *q* to *t* ∈ 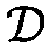 . Columns *A, B* ∈ *Aᵢ* are chosen. The column *B* is such that it allows to perform relevancy check between the input query *q* and the entries *bᵢ* ∈ *B.* The method disclosed creates a union *U* of all possible values in *A.* A mapping is defined as *φ*: *Q* → *U.* The map *φ* enables the first connection between *q* and 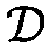 *.* Then the map *ζ* can be defined as composition *ζ = φ ∘ f_{MCTS} .* The mappings defined are explained in the later steps of the method 200.
The pre-defined set of heuristics rules are considered for choosing the column *A*. However, the method disclosed works even if all the pre-defined set of heuristics rules are not met. The considerations for choice for column *A* are as given below,
*1)* A should be categorical variable.
2) A should have good coverage in the sense that |*U*| (cardinality of U) should be optimal.
3) If |*U*| is too less, querying 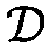 will fetch too many results. If |*U*| is very large then querying 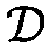 will fetch too few results.
4) Very large |*U*| will mean that domain is too fragmented. Very small |*U*| will mean that domain is too consolidated.
5) Overlap of elements between the subsets of *D* should exist. The intersection between the subsets of $D {∩}_{i = 0}^{n} {d}_{i} \neq ∅$, where *d* ⊂ *D.*

The pre-defined set of heuristics rules are given as below,
1) The domain *D* of *A* should be such that elements *d* of *D* have |*d*| ≥ 2.
2) Ratio of |*U*| to number of unique elements in *D* should approximately be between 0.0005 to 0.001
3) Ratio of unique elements in *D* to total elements in *D* should approximately be between 0.2 and 0.3.

Further, at step 204 of the method 200, one or more hardware processors 102 are configured to select a set of attributes amongst the plurality of attributes based on a Retrieval Augmented Generation (RAG), a large language model (LLM) and the natural language query. Here any LLM spanning from a finetuned local model like T5 to a pre-tuned application programming interface (API) based LLMs like GPT-4o can be used. To compute the mapping *φ,* a onetime setup of the RAG is needed, which is used in answering subsequent input queries *q*. Let *R* denote a RAG system *R = {V, f_{M}*} system consisting of a vector database *V* and the LLM based function *f_{M}.* The function *f_{M}* performs instruction based task and *V* stores the vectors corresponding to the data.

Descriptions *x_{des}* for each *x* ∈ *U* using the function *f_{M}* and store the pair (*x, x_{des}*) in V. Post creating a RAG setup, the map *φ* can be computed by querying the R to retrieve relevant *xᵢ* as follows:
· Retrieve a broader list of *xⱼ* for the input query *q* by semantically matching *q* with *x_{des}.*
· The final *xᵢ*'s are selected by further refining with the help of *f_{M}* such the *xᵢ* ⊆ *xⱼ*

Algorithm 1 as provided below establishes the initial link between the natural language query *q* and the database 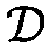 *,* laying the foundation for the subsequent searching step as explained in step 206 of the method 200.

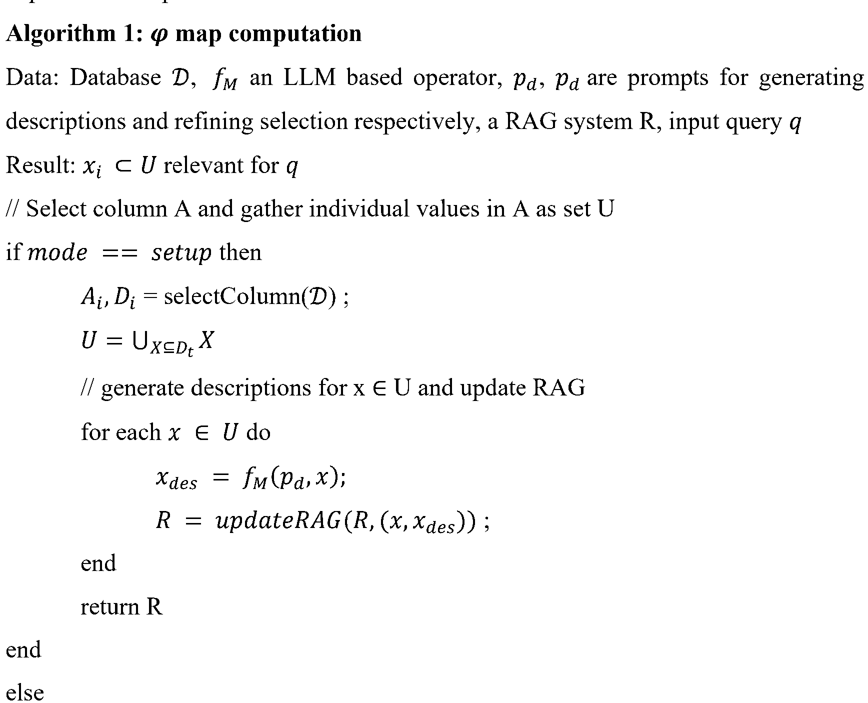

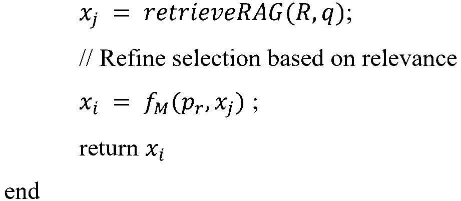

Here, algorithm 1 iteratively updates the RAG using (i) the set of descriptions *x_{des}* generated for the plurality of attributes based on a first prompt *p_{d}* provided to the large language model *f_{M},* and (ii) the plurality of attributes. Further, algorithm 1 retrieves a group of attributes amongst the plurality of attributes using the iteratively updated RAG based on the natural language query. And finally, selects the set of attributes amongst the group of attributes based on a second prompt *pᵣ* provided to the large language model *f_{M}.*

Furthermore, at step 206 of the method 200, one or more hardware processors 102 are configured to determine an optimal set of attributes from the set of attributes by performing a Contextual Monte-Carlo tree search (CMCTS). This CMCTS is performed to construct a Monte Carlo Tree based on (i) an upper confidence bound (UCB) in a selection step of the CMCTS, and (ii) a reward function calculated in a simulation step of the CMCTS based on a relevancy count and a total count. The Monte Carlo Tree comprises a set of nodes representing the set of attributes. Further to the explanation provided before, given the relevant *xᵢ*, the data relevant to *q* from the 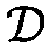 can be selected as follows:
- For each subset *X* ⊂ *xᵢ*, select rows ∈ 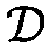 .
- Select all rows from *tₓ* for which is_relevant(*q*, *t_{X}B*)) == TRUE.

The above brute force approach to retrieves all the data and filtering through relevancy checking works in principle but it has many challenges in practice. In most practical scenarios, the number of *xᵢ* and possible subsets *X* itself are large and the number of rows corresponding to all subsets of *xᵢ* are even larger. This makes it impractical to check for the relevancy for every single input query. Hence a modified MCTS named CMCTS with a unique reward function is disclosed hereby. Given the *xᵢ* from the algorithm 1, the objective is to choose subsets of *xᵢ* such that corresponding *t* ∈ 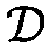 are relevant with respect to *q.*

The broad outline of the algorithm is explained as follows: Start with an empty node called root node. Then select a few random subsets of *xᵢ*, which are called nodes, and expand root node by adding these subsets. Retrieve all rows corresponding to expanded node and calculate relevancy-based reward. This step is called simulation. Finally, back propagate reward to each node in the path. In the second pass, choose nodes which have highest rewards and again expand them.

The Monte Carlo Tree has the set of nodes, and each node is defined by a unique *X* and has the set of node attributes. In the present disclosure, the phrase "node" and *"X"* may be used interchangeably. The set of node attributes are as given below,
1. a list for storing a set of categorical entities for uniquely defining the node,
2. a win for storing a cumulative reward in the node,
3. a visit for storing number of visit to the node,
4. a parent for storing a parent node of the node,
5. a child for storing children nodes of the node,
6. a total count for storing total number of rows retrieved from the database corresponding to the node,
7. a relevancy count for storing number of relevant rows,
8. a terminal representing (i) true if the node is terminal, or (ii) false if the node is not terminal, and
9. a UCB storing UCB score of the node.

CMCTS is used for finding the optimal set of attributes *X* ⊆ *xᵢ*. For root node of the Monte Carlo Tree, the value of *search_property* will be an empty set 0̸. The different phases of the CMCTS are the selection step, an expansion step, the simulation step and a back propagation step.

In the selection step of the CMCTS, the Monte Carlo Tree is traversed from root to leaf node by selecting child nodes using UCB (upper confidence bound) formula. The selection idea is to explore the unexplored node with high total count. To achieve this the following changes are made to UCB:
- Total number of entries for the current *X* is considered in the exploration part. The exploration part is multiplied by logarithm of (total count+1) to increase the weight of nodes with total entries greater than a pre-defined threshold.
- Exploration parameter is kept to 2. This is done to prioritize exploration.

The UCB of a node is calculated based on the win, the visit, the visit of a parent node and the total count, wherein the UCB is mathematically represented as, $UCB \left(X\right) = \frac{X . win}{X . visit} + 2 \sqrt{\frac{ln X . parent . visit}{X . visit}} . ln \left(X.total count+1\right)$ where *X* represents the node.

In the expansion step of the CMCTS, if the leaf node corresponds to a non-terminal state and has unvisited children, expand the tree by adding one or more child nodes. Create new nodes by adding a new element to *X* from the available set. *X.child* becomes $X . child = \left\{X∪\left.{c}_{j}\right|{c}_{j}∈{x}_{i}\X,j=1,2,…,n\right\}$ Each expansion adds at most *n* nodes to the current node.

In the simulation step of the CMCTS, a contextually relevant score of the current node is calculated. The reward of the current node is calculated by passing the contextually relevant score to the reward function R. Simulation in this case refers to relevancy checking. If the total count is greater than the pre-defined threshold, do not perform relevancy checking and calculate the reward based upon total count. Otherwise, if the total count is less than a pre-defined threshold, perform relevancy checking. And the reward is calculated based upon both total count and the relevancy count.

When the simulation of a node concludes, a reward is assigned to the node to indicate whether the CMCTS algorithm should pursue the node further or not. If the total count is below the pre-defined threshold, a relevancy check is performed to get the relevancy count. Ideally, the relevancy count directly serves as the reward for the node in this case. However, if the node's total count exceeds the pre-defined threshold, the relevancy check is not performed. In this scenario, a method to assign a proportional reward is used that reflects both the number of relevant entries and the total count. Specifically, the reward for 50 relevant entries out of 100 total is to be greater than the reward for 5 relevant entries out of 10 total. To achieve this, the ratio of relevancy count is scaled by applying a logarithmic function based on the total count. The logarithmic function used is defined as: $f \left(n\right) = \frac{ln \left(1+n\right)}{1 + 0.1 \times ln \left(1+n\right)}$ This function grows slowly, ensuring that the rewards remain within a manageable range. The function asymptotically approaches a value of 10 as n increases. ${lim}_{n \to ∞} f \left(n\right) = 10$ For practical purposes, given that the database has around 3.4 million rows, it is found that *f*(4 × 10⁶) ≈ 6. If the total count for a node's categories is zero, the node is penalized by assigning it a reward of -6 and marking it terminal. For nodes with the total count greater than or equal to the pre-defined threshold the reward function is, $R \left(total count,relevancy count\right) = f \left(n\right) ,$ Since, *f*(*n*) is an increasing function, nodes with higher total counts receive a higher reward, which in turn influences the exploitation term in the Upper Confidence Bound (UCB) selection. For nodes with the total count less than the pre-defined threshold, the reward function is defined as: $R \left(total count,relevancy count\right) = \frac{relevancy count}{total count} \times f \left(n\right) ,$ In this case, the reward is proportional to the ratio of relevant entries to total entries, scaled by the function *f*(*n*)*,* which ensures that the reward reflects both the relevancy count and the total count.
The reward function overall is mathematically represented as, $R \left(total count,relevancy count\right) = \left\{\begin{matrix}- 6 , & n = 0 \\ \frac{relevancy count \times f \left(n\right)}{total count} , & n < threshold \\ f \left(n\right) , & n \geq threshold\end{matrix}\right.$

In the back propagation step of the CMCTS, the visit and the win of each node is updated from leaf node to root node of the Monte Carlo Tree. If a terminal node is encountered that does not expand, back propagate with a reward of 0. This will increase the visits of that node and prevent subsequent rollout iterations from targeting it.

Finally, at step 208 of the method 200, one or more hardware processors 102 are configured to determine a set of relevant rows corresponding to the optimal set of attributes from the relational database. This set of relevant rows represents a contextually relevant response to the natural language query. In typical scenarios, the node with the highest number of visits is considered the best. However, the "best" node is one that maximizes both the win and the relevancy count. Nodes with a total number of entries exceeding a certain threshold have the relevancy count of 0. For these nodes, high rewards are prioritized to encourage exploration and expansion. Since the relevancy count is 0, higher wins would not matter for those nodes. So, a combination of relevant entries and reward is used to ensure select nodes with non-zero relevant entries. Algorithm 2 for the CMCTS is given below,

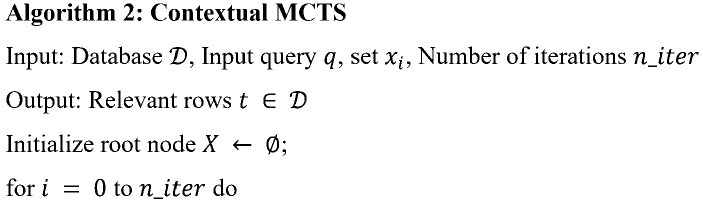

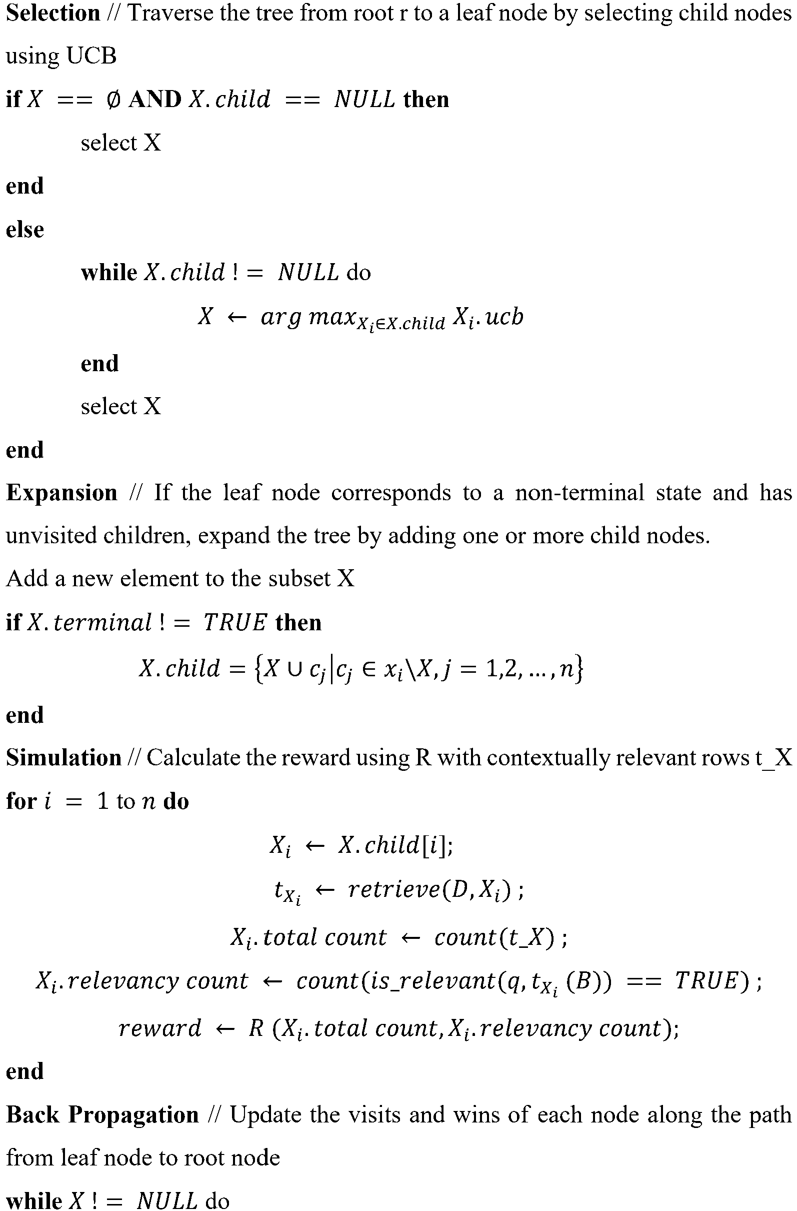

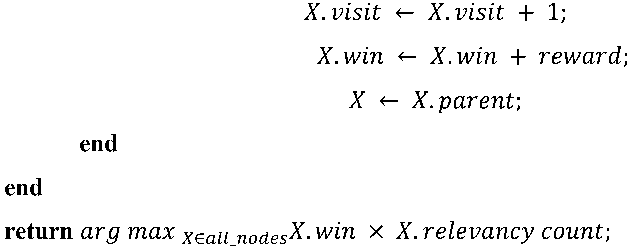

A working example explaining CMCTS is provided henceforth. For this, a large database consisting of approximately 3M rows is considered. Some of the main attributes of the database are:
- name: name of the company
- description: short description of the company
- category: list of categories it belongs to
- founders: name of founders
- funding type: type of investment or funding
- URL: homepage URL
- address: headquarters address
- number of employees: range of number of employees working

For the example purpose, column A is chosen as category and column B as description. Let a natural language query is *q* = "Startups in the area of Future of technology for contact center". No SQL query can be constructed such that q is satisfied contextually. Using algorithm 1 *xᵢ* is computed. *xᵢ* consists of the following 10 categories which are relevant for the *q*:
AI, Speech Recognition (SR), Chatbot, Cloud Computing (CC), Unified Communications (UC), NLP, Virtual Assistant (VA), Customer Service (CS), CRM, Real Time.

The following depicts iteration wise walk through of the CMCTS algorithm, showing the attributes of each node in the process.

### ITERATION 1:

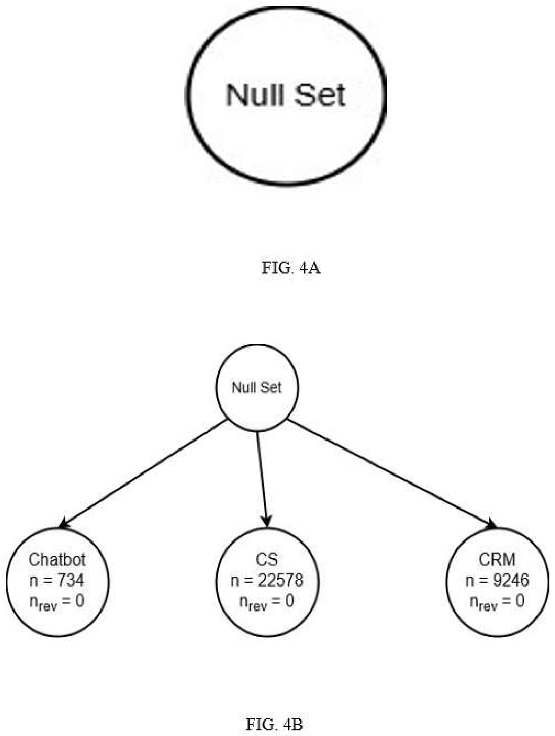

The root node is an empty set of categories. For the first iteration root node is selected as shown in FIG.4A. Root node is randomly expanded into three new nodes as shown in FIG. 4B. The total count and relevancy count for each node in simulation phase is noted. The reward for the same is back propagated back to the root node.

### ITERATION 2:

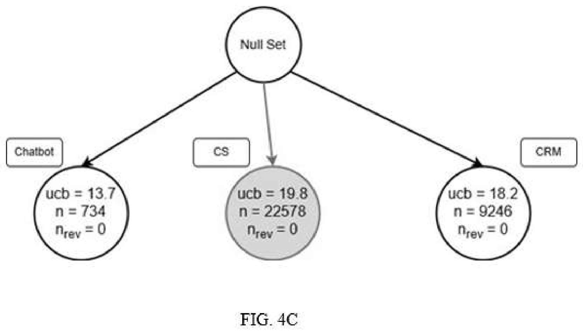

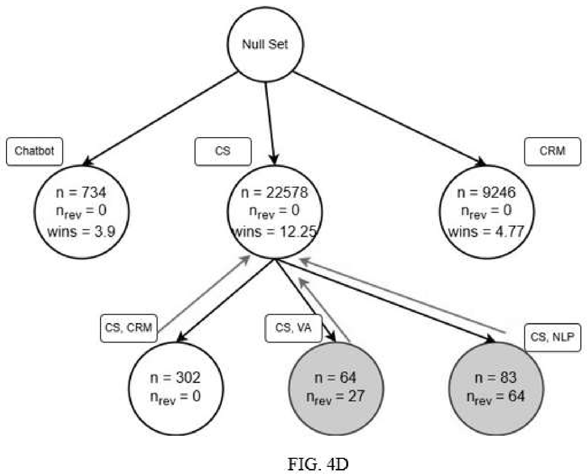

Starting from root node, again select the node with the maximum UCB value as shown in FIG.4C. The selected node (here, CS) is randomly expanded into; three new nodes. The total count and relevancy count for each node in simulation phase is noted. The reward is back propagated back to the root node as shown in FIG.4D.

### FINAL ITERATION:

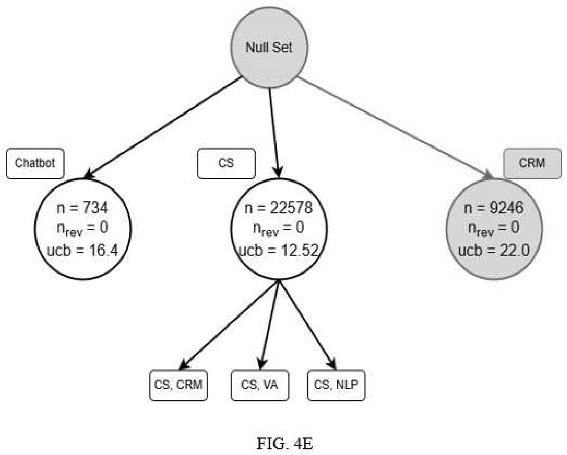

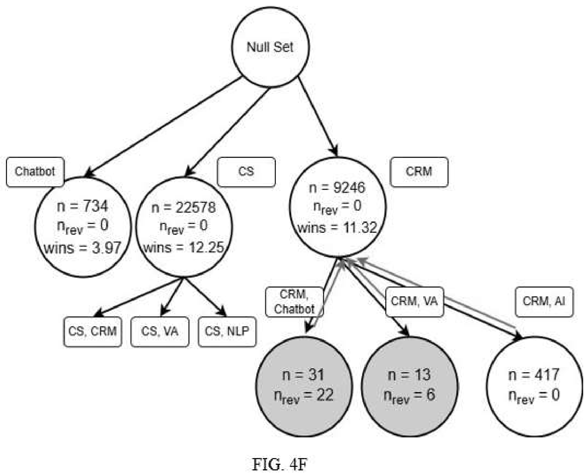

Select CRM as the node to expand FIG. 4E. Expand CRM into new nodes. Note the total count and the relevancy count for each node in simulation phase. For two out of three nodes the total count is less than the pre-defined threshold. Hence, relevancy checking is done for those nodes and mark the node as terminal. Back propagate the reward to the root node as shown in FIG.4F. Choose the best node from the constructed tree. The top 3 nodes are given in table 1. From the table, it is clear that ['CS', 'NLP'] is the most optimal category combination when running for 3 iterations.

**Table 1**

| **Category Combination** | **win** | **Relevancy count** | **Win× relevancy count** |
|---|---|---|---|
| ['CS', 'NLP'] | 2.36 | 64 | 151.04 |
| ['CRM', 'Chatbot'] | 1.82 | 22 | 40.04 |
| ['CS', 'VA'] | 1.24 | 27 | 33.48 |

The method disclosed solves the real-world problem of searching for companies relevant to a given topic or capability. The database contains multiple fields. But when companies are searching based on a given topic or capability of product, it's difficult to map this requirement to query as the database does not have information which can be directly mapped to any topic or capabilities of company. Hence a categories column was selected which contains domain to which given company belongs. Data has a total of 800 unique categories and each company belongs to at least one category. The above solution was implemented for this task and relevancy of each company was checked with topic or capabilities and based on relevancy score the best combination of categories was selected which yields better output.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
selecting, via one or more hardware processors, a column comprising a plurality of attributes from a relational database based on a natural language query received from a user, using a pre-defined set of heuristics rules applied on a set of columns of the relational database (202);
selecting, via the one or more hardware processors, a set of attributes amongst the plurality of attributes based on a Retrieval-Augmented Generation (RAG), a large language model and the natural language query (204);
determining, via the one or more hardware processors, an optimal set of attributes from the set of attributes by performing a Contextual Monte-Carlo tree search (CMCTS), wherein the CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count (206); and
determining, via the one or more hardware processors, a set of relevant rows corresponding to the optimal set of attributes from the relational database to generate a contextually relevant response to the natural language query (208).

2. The processor implemented method as claimed in claim 1, wherein the set of attributes are selected by,
iteratively updating, via the one or more hardware processors, the RAG using (i) a set of descriptions generated for the plurality of attributes based on a first prompt provided to the large language model, and (ii) the plurality of attributes;
retrieving, via the one or more hardware processors, a group of attributes amongst the plurality of attributes using the iteratively updated RAG based on the natural language query; and
selecting, via the one or more hardware processors, the set of attributes amongst the group of attributes based on a second prompt provided to the large language model.

3. The processor implemented method as claimed in claim 1, wherein a node amongst the set of nodes comprises a set of node attributes, wherein the set of node attributes comprising,
a list for storing a set of categorical entities for uniquely defining the node,
a win for storing a cumulative reward in the node,
a visit for storing number of visit to the node,
a parent for storing a parent node of the node,
a child for storing children nodes of the node,
a total count for storing total number of rows retrieved from the database corresponding to the node,
a relevancy count for storing number of relevant rows,
a terminal representing (i) true if the node is terminal, or (ii) false if the node is not terminal, and
a UCB storing UCB score of the node.

4. The processor implemented method as claimed in claim 1, wherein the CMCTS is iteratively performed to construct the Monte Carlo Tree initialized with a root node using the selection step, an expansion step, the simulation step and a back propagation step,
wherein the root node is an empty node;
wherein the selection step performs traversal on the Monte Carlo Tree along a path from the root node to a leaf node to select a node at each iteration based on the UCB;
wherein the expansion step randomly creates a set of new nodes to the Monte Carlo Tree if the selected node in the selection step is a non-terminal node;
wherein the simulation step performs a relevancy checking to calculate the reward function using at least (a) the relevancy count and the total count if the total count is less than a pre-defined threshold, or (b) the total count if the total count is greater than the pre-defined threshold, or (c) a pre-defined value if the total count is equal to zero; and
wherein the back propagation step updates the win and the visit of each node along the path from the leaf node to the root node of the Monte Carlo Tree.

5. The processor implemented method as claimed in claim 4, wherein the optimal set of attributes are determined based on the win and the relevancy count at each node along all paths from the root node to each leaf node of the Monte Carlo Tree.

6. The processor implemented method as claimed in claim 4, wherein the UCB of a node is calculated based on the win, the visit, the visit of a parent node and the total count, wherein the UCB is mathematically represented as, $UCB \left(X\right) = \frac{X . win}{X . visit} + 2 \sqrt{\frac{ln X . parent . visit}{X . visit}} . ln \left(X.total count+1\right)$ where *X* represents the node.

7. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
select a column comprising a plurality of attributes from a relational database based on a natural language query received from a user, using a pre-defined set of heuristics rules applied on a set of columns of the relational database;
select a set of attributes amongst the plurality of attributes based on a Retrieval- Augmented Generation (RAG), a large language model and the natural language query;
determine an optimal set of attributes from the set of attributes by performing a Contextual Monte-Carlo tree search (CMCTS), wherein the CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count; and
determine a set of relevant rows corresponding to the optimal set of attributes from the relational database to generate a contextually relevant response to the natural language query.

8. The system as claimed in claim 7, wherein the set of attributes are selected by,
iteratively updating the RAG using (i) a set of descriptions generated for the plurality of attributes based on a first prompt provided to the large language model, and (ii) the plurality of attributes;
retrieving a group of attributes amongst the plurality of attributes using the iteratively updated RAG based on the natural language query; and
selecting the set of attributes amongst the group of attributes based on a second prompt provided to the large language model.

9. The system as claimed in claim 7, wherein a node amongst the set of nodes comprises a set of node attributes, wherein the set of node attributes comprising,
a list for storing a set of categorical entities for uniquely defining the node,
a win for storing a cumulative reward in the node,
a visit for storing number of visit to the node,
a parent for storing a parent node of the node,
a child for storing children nodes of the node,
a total count for storing total number of rows retrieved from the database corresponding to the node,
a relevancy count for storing number of relevant rows,
a terminal representing (i) true if the node is terminal, or (ii) false if the node is not terminal, and
a UCB storing UCB score of the node.

10. The system as claimed in claim 7, wherein the CMCTS is iteratively performed to construct the Monte Carlo Tree initialized with a root node using the selection step, an expansion step, the simulation step and a back propagation step,
wherein the root node is an empty node;
wherein the selection step performs traversal on the Monte Carlo Tree along a path from the root node to a leaf node to select a node at each iteration based on the UCB;
wherein the expansion step randomly creates a set of new nodes to the Monte Carlo Tree if the selected node in the selection step is a non-terminal node;
wherein the simulation step performs a relevancy checking to calculate the reward function using at least (a) the relevancy count and the total count if the total count is less than a pre-defined threshold, or (b) the total count if the total count is greater than the pre-defined threshold, or (c) a pre-defined value if the total count is equal to zero; and
wherein the back propagation step updates the win and the visit of each node along the path from the leaf node to the root node of the Monte Carlo Tree.

11. The system as claimed in claim 10, wherein the optimal set of attributes are determined based on the win and the relevancy count at each node along all paths from the root node to each leaf node of the Monte Carlo Tree.

12. The system as claimed in claim 10, wherein the UCB of a node is calculated based on the win, the visit, the visit of a parent node and the total count, wherein the UCB is mathematically represented as, $UCB \left(X\right) = \frac{X . win}{X . visit} + 2 \sqrt{\frac{ln X . parent . visit}{X . visit}} . ln \left(X.total count+1\right)$ where X represents the node.

13. One or more non-transitory machine-readable information storage mediums comprising one or more instructions which when executed by one or more hardware processors cause:
selecting a column comprising a plurality of attributes from a relational database based on a natural language query received from a user, using a pre-defined set of heuristics rules applied on a set of columns of the relational database;
selecting a set of attributes amongst the plurality of attributes based on a Retrieval- Augmented Generation (RAG), a large language model and the natural language query;
determining an optimal set of attributes from the set of attributes by performing a Contextual Monte-Carlo tree search (CMCTS), wherein the CMCTS constructs a Monte Carlo Tree comprising a set of nodes representing the set of attributes, based on (i) an upper confidence bound (UCB) in a selection step of the CMCTS, and (ii) a reward function calculated in a simulation step of the CMCTS based on a relevancy count and a total count; and
determining a set of relevant rows corresponding to the optimal set of attributes from the relational database to generate a contextually relevant response to the natural language query.

14. The one or more non-transitory machine-readable information storage mediums as claimed in claim 13, wherein the set of attributes are selected by,
iteratively updating the RAG using (i) a set of descriptions generated for the plurality of attributes based on a first prompt provided to the large language model, and (ii) the plurality of attributes;
retrieving a group of attributes amongst the plurality of attributes using the iteratively updated RAG based on the natural language query; and
selecting the set of attributes amongst the group of attributes based on a second prompt provided to the large language model.

15. The one or more non-transitory machine-readable information storage mediums as claimed in claim 13, wherein a node amongst the set of nodes comprises a set of node attributes, wherein the set of node attributes comprising,
a list for storing a set of categorical entities for uniquely defining the node,
a win for storing a cumulative reward in the node,
a visit for storing number of visit to the node,
a parent for storing a parent node of the node,
a child for storing children nodes of the node,
a total count for storing total number of rows retrieved from the database corresponding to the node,
a relevancy count for storing number of relevant rows,
a terminal representing (i) true if the node is terminal, or (ii) false if the node is not terminal, and
a UCB storing UCB score of the node.
